# EUROPÄISCHE PATENTSCHRIFT

(11) **EP 0 602 464 B1**
(45) Veröffentlichungstag und Bekanntmachung des Hinweises auf die Patenterteilung: **27.05.1998**
(21) Anmeldenummer: 93119418.7
(22) Anmeldetag: 02.12.1993
(51) Int. Cl.: B07C 5/34, G01B 11/24, G01B 11/30, B07C 5/342, G06K 9/00

(54) **Verfahren zum Erkennen von Objekten und Vorrichtung zur Durchführung des Verfahrens**
Method and apparatus for recognizing objects
Procédé et appareil pour reconnaître des objets

(30) Priorität: 12.12.1992 DE 4241990
(43) Veröffentlichungstag der Anmeldung: 22.06.1994
(73) Patentinhaber: RWE Entsorgung Aktiengesellschaft, 45128 Essen (DE)
(72) Erfinder: Wintrich, Franz,Dipl.-Ing., D-45309 Essen (DE); Kaiser, Dieter,Dipl.-Ing., D-45357 Dortmund (DE)

(56) Entgegenhaltungen:
- EP-A- 0 562 506
- FR-A- 2 667 255
- GB-A- 2 247 312
- US-A- 5 046 019
- ROGERS 'PROCEEDINGS OF THE SPIE VOL.1709 APPLICATIONS OF ARTIFICIAL NEURAL NETWORKS III' 24. April 1992 , SPIE MITTEILUNG VON R.LEPAGE ET AL."EXTRACTION OF TEXTURE FEATURES,USW. S.64-75
- NEUBAUER '1991 IEEE INT.JOINT CONFERENCE ON NEURAL NETWORKS VOL.2' 18. November 1991 , IEEE & AL. MITTEILUNG "FAST DETECTION AND CLASSIFICATION OF DEFECTS ON TREATED METAL,USW." S.1148-1153
- OLSSON ET AL. '1992 INTERN. CONFERENCE ON INDUSTRIAL,ELECTRONICS,CONTROL INSTRUMENTATION AND AUTOMATION VOL.3' 13. November 1992 , IEEE & AL. , XP365382 MITTEILUNG "WEB PROCESS INSPECTION,USW" S.1443-1448

## Beschreibung

Die vorliegende Erfindung betrifft ein Verfahren zum Erkennen von Objekten durch Bestrahlen der Objekte mit elektromagnetischen Wellen im UV- bis IR-Bereich und Verarbeitung der vom Objekt ankommenden Wellen in einer elektronischen Signalverarbeitungsanlage und Abgabe von Signalen aus der elektronischen Signalverarbeitungsanlage, wobei die vom Objekt ankommenden Wellen auf wenigstens ein mit Fotodioden ausgestattetes Chip auftreffen, welches die aufgenommene Fotoanregung in ein neuronales Netz weiterleitet und daß von diesem Objekt jeweils nach Änderung bestimmter einzelner oder mehrere Objektmerkmale, wie räumliche Anordnung, Form, Konturen oder Merkmalsänderungen durch Entfernung von Teilen des Objekts jeweils die ankommenden Wellen auf das Chip auftreffen und die Weiterleitung der jeweils vom Chip aufgenommenen Fotoanregungen an das neuronale Netz mindestens so lange fortgesetzt wird, bis das neuronale Netz wenigstens ein für das Objekt spezifisches Signal abgibt, das bestimmte Folgeschritte in Gang setzt.

Der Erkennung von Objekten kommt in vielen Bereichen große Bedeutung zu. Dies gilt vor allem für eine Reihe technischer Bereiche. So kann es beispielsweise bei automatischer Bearbeitung von Gegenständen erforderlich sein, einen Gegenstand zunächst zu erkennen und dann einer Weiterverarbeitungsstufe zuzuführen. Von besonders großer Bedeutung ist die exakte Erkennung von Materialien bei Sortiervorgängen. Hierbei werden nach dem Stand der Technik Geräte verwendet, die von einem Objekt ankommende elektromagnetische Wellen registrieren, mit gespeicherten Daten vergleichen und anschließend Signale aussenden, die z. B. eine Sortiervorrichtung in Gang setzen.

Bei diesen bekannten Methoden werden mit Hilfe der von den Objekten ankommenden elektromagnetischen Wellen Abbildungen gegenständlicher Objekte erzeugt und diese mit gespeicherten Abbildungen verglichen.

So wird z. B. in der DE-OS 41 25 045 ein Verfahren zum Sortieren von Abfallgemischen offenbart, durch Bestrahlen der Abfallobjekte mit elektromagnetischen und / oder akustischen Wellen, Aufnahme der von den bestrahlten Abfallobjekten ankommenden Wellen in einer Signalverarbeitungsvorrichtung zur Identifizierung der Abfallobjekte und Weiterleiten von Signalen aus der Signalverarbeitungsvorrichtung zu einer Sortiervorrichtung, die das identifizierte Abfallobjekt aussortiert. Die Signalverarbeitungsvorrichtung erfaßt Merkmale wie äußere Form des Objekts, wie z. B. Flaschen-, Becher-, Tubenformen, kubische und andere Formen sowie Schriftzüge, Produktnamen, Firmen- bzw. Herstellernamen, Warenzeichen und Farben.

Solche Verfahren benötigen demgemäß zur Erkennung von Objekten und zum Ergreifen bestimmter Maßnahmen eine möglichst vollständige Datenbank, die Umformung ankommender elektromagnetischer Wellen in bestimmte Abbildungen und Vergleich der Abbildungen mit den in der Datenbank möglichst vollständig gespeicherten Vergleichsdaten. Nach erfolgter Erkennung wird dann ein Signal ausgelöst, welches z. B. eine Sortiervorrichtung in Betrieb setzt, die den erkannten Gegenstand aussortiert.

In der GB 2 247 312 A wird eine Vorrichtung zur Oberflächenuntersuchung offenbart, die eine Lichtquelle zur Bestrahlung der Probe aufweist, einen lichtempflindlichen Detektor, der das von der Probe ankommende Licht aufnimmt und ein Erkennungssystem zur Analyse des vom Detektor ankommenden Lichts, wobei das Erkennungssystem ein Teil besitzt, das Daten einschließlich einer Intensitätskontur des ankommenden Lichtes durch Merkmalsauswahl auswählt und daß ein neuronales Netzwerk vorhanden ist, das die ausgewählten Daten analysiert und charakteristische Daten anderer Oberflächen aussondert.

In 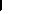 Proceedings, Spie - The International Society for optical Engineering", Vol. 1709, Part One, 21 - 24 April 1992, wird ein neuronales Netz offenbart, dem die Photoanregung von Objekten ankommenden Wellen zugeführt wird, wobei die Objekte von verschiedenen räumlichen Richtungen betrachtet werden.

Der Anmelderin ist es nunmehr gelungen, ein wesentlich direkteres, einfacheres Verfahren zum Erkennen von Objekten zu entwickeln, ohne daß ein Vergleich mit umfangreichen gespeicherten Daten erforderlich ist durch Bestrahlen der Objekte mit elektromagnetischen Wellen im UV- bis IR-Bereich, Verarbeitung der vom Objekt ankommenden Wellen durch eine elektronische Signalverarbeitungsanlage und Abgabe von Signalen aus der elektronischen Signalverarbeitungsanlage, wobei die vom Objekt ankommenden Wellen auf wenigstens ein mit Fotodioden ausgestattetes Chip auftreffen, welches die aufgenommene Fotoanregung an ein neuronales Netz weiterleitet, wobei von diesem Objekt nach jeweiliger Änderung bestimmter einzelner oder mehrerer Objektmerkmale, wie räumliche Anordnung, Form und Konturen oder Merkmalsänderungen durch Entfernung von Teilen des Objekts jeweils die ankommenden Wellen auf das Chip auftreffen und die Weiterleitung der jeweils vom Chip angenommenen Fotoanregungen an das neuronale Netz mindestens so lange fortgesetzt wird, bis das neuronale Netz wenigstens ein für das Objekt spezifisches Signal abgibt, das als Folgeschritt eine Sortiervorrichtung in Gang setzt, wobei das durch das spezifische Signal gekennzeichnete Objekt aussortiert wird.

Das erfindungsgemäße Verfahren ist vor allem darauf anwendbar, daß Objekte aus einem Objektgemisch erkannt werden bzw. daß bevorzugt Objekte nach Vereinzelung aus dem Objektgemisch erkannt werden und anschließend als Folgeschritt eine Sortiervorrichtung in Gang gesetzt wird, die das erkannte Objekt aussortiert.

Die Objekterkennung erfolgt in der Weise, daß man Objekte zunächst mit elektromagnetischen Wellen im Ultraviolettbereich, im Bereich des sichtbaren Lichtes oder im Infrarotbereich bestrahlt. Die vom Objekt ankommenden Wellen, z. B. durch Reflektion am Objekt oder nach Durchdringen oder teilweisem Durchdringen des Objekts oder Reflektion und teilweiser Absorption und Abgabe von Wellen anderer Wellenlänge als der ursprünglich zur Bestrahlung eingesetzten Wellen, treffen auf wenigstens ein mit Fotodioden ausgestattetes Chip auf, welches die aufgenommene Fotoanregung an ein neuronales Netz weiterleitet.

Aus Veränderungen der Lage des Objekts, so daß Wellen von der Vorder-, Unter-, Rückseite oder sonstiger Sicht im neuronalen Netz ankommen, aus bestimmten Konturen und Formen eines Objekts, die für dieses charakteristisch sind, wie z. B. die Kontur des Fußes eines Joghurt-Bechers, ferner unterschiedlicher Oberflächenbeschaffenheit des Objekts oder charakteristischen Bruchstücken des Objektes, ermittelt das System ein spezifisches Merkmal.

Nach Einspeisung einer ausreichenden Anzahl solcher unterschiedlicher Informationen ist das neuronale Netz in der Lage, ein Objekt sicher zu erkennen und dann ein spezifisches Signal oder mehrere spezifische Signale abzugeben, durch die bestimmte Folgeschritte in Gang gesetzt werden.

Geht man daher von einem bestimmten Objekt aus und ändert bestimmte Objektmerkmale, wie räumliche Anordnung, Form und Konturen oder durch Entfernung von Teilen des Objekts, so ermittelt das neuronale Netz ein gemeinsames spezifisches Merkmal, aufgrund dessen die Aussortierung dieses Objektes bzw. der geänderten Objekte mit gleichem spezifischem Merkmal in einen bestimmten Sammelbehälter veranlaßt wird.

Von besonderer Bedeutung ist hierbei das Ingangsetzen einer Sortiervorrichtung, die dann beispielsweise von einem Förderband, auf dem die Objekte aus Objektgemischen vereinzelt wurden, das erkannte Objekt aussortiert. Erfindungsgemäß ist es auch möglich, daß die erfindungsgemäße Vorrichtung zusätzliche eine Vorrichtung zur spektralen Zerlegung von Licht besitzt, wie - z. B. ein Prisma, ein Gitter oder einen Spalt -, so daß die vom Chip aufgenommene Fotoanregung vor Weiterleitung zum neuronalen Netz spektral zerlegt wird, einem Kantenfilter und/oder einem Texturfilter zugeführt wird, wobei das erhaltene graue Licht bevorzugt zusätzlich und das spektral zerlegte Licht und/oder die durch das Kantenfilter erhaltene Objektkontur und/oder die durch das Texturfilter erhaltene Oberflächenstruktur an das neuronale Netz weitergeleitet wird. Auch weitere Verfahrens- und Vorrichtungsmerkmale wie z. B. Phasenverschiebung können zusätzlich zur Erkennung genutzt werden.

Eine weitere Ausgestaltung der vorliegenden Erfindung besteht darin, daß die vom Objekt ankommenden Wellen zunächst spektral zerlegt werden und anschließend auf das mit Fotodioden ausgestattete Chip auftreffen.

Die Aussortierung selbst kann nach dem Stand der Technik auf vielerlei Art erfolgen, beispielsweise pneumatisch, hydraulisch, mechanisch oder auf andere Weise.

Die Erkennung wird zusätzlich dadurch ganz wesentlich verbessert, daß man die Objekte zunächst aus dem Objektgemisch vereinzelt.

Es ist bekannt, daß das Aussortieren sortenreiner Kunststoffe aus Kunststoffabfällen von besonderer Bedeutung im Hinblick auf die Wiederverwendung von Kunststoffabfällen ist.

Das erfindungsgemäße Verfahren erlaubt es, ohne Anfertigung von Abbildungen und ohne Vergleich mit gespeicherten Daten aus einer Datenbank, Kunststoffabfälle, auch wenn diese in unterschiedlicher Lage bestrahlt werden oder nur als Bruchstücke vorliegen, sehr zuverlässig zu identifizieren, so daß man sortenreine Kunststoffe zurückgewinnen kann, die einer entsprechenden hochwertigen Wiederverwendung zugeführt werden können.

Man arbeitet erfindungsgemäß bevorzugt mit sichtbarem Licht. Jedoch auch UV-Licht und IR-Licht sind erfindungsgemäß mit sehr guten Ergebnissen einsetzbar.

Das neuronale Netz kann zusätzlich mit sogenannten Fuzzy-Regeln ausgestattet sein.

Dies hat zur Folge, daß über solche Regeln bestimmte Vorabinformationen in das neuronale Netz eingegeben werden können und in die Lernvorgänge im neuronalen Netz zusätzlich eingegriffen werden kann.

Die vorliegende Erfindung betrifft auch eine Vorrichtung zum Erkennen von Objekten zur Durchführung des Verfahrens nach Anspruch 1, die eine Strahlenquelle für elektromagnetische Wellen aus dem UV- bis IR-Bereich und eine elektronische Signalverarbeitungsanlage enthält, wenigstens ein mit Fotodioden ausgestattetes Chip zur Aufnahme von elektromagnetischen Wellen aufweist, die von einem bestrahlten Objekt ankommen, sowie Mittel zur Änderung bestimmter einzelner oder mehrerer Objektmerkmale, wie räumliche Anordnung, Form und Konturen oder zur Entfernung von Teilen des Objekts, wobei nach solchen Änderungen die vom Objekt ankommenden Wellen auf das Chip auftreffen und die ein neuronales Netz aufweist, an das vom Chip aufgenommene Fotoanregung mindestens so lange weitergeleitet wird, bis das neuronale Netz wenigstens ein für das Objekt spezifisches Signal abgibt, so daß eine vorhandene Sortiervorrichtung in Gang gesetzt wird, die vom neuronalen Netz wenigstens ein Signal erhält zur Aussortierung eines Objekts.

## Patentansprüche

1. Verfahren zum Erkennen von Objekten durch Bestrahlung der Objekte mit elektromagnetischen Wellen im UV- bis IR-Bereich, Verarbeitung der vom Objekt ankommenden Wellen durch eine elektronische Signalverarbeitungsanlage und Abgabe von Signalen aus der elektronischen Signalverarbeitungsanlage, wobei die vom Objekt ankommenden Wellen auf wenigstens ein mit Fotodioden ausgestattetes Chip auftreffen, welches die aufgenommene Fotoanregung an ein neuronales Netz weiterleitet, wobei von diesem Objekt nach jeweilige Änderung bestimmter einzelner oder mehrerer Objektmerkmale, wie räumliche Anordnung, Form und Konturen oder Merkmalsänderungen durch Entfernung von Teilen des Objekts jeweils die ankommenden Wellen auf das Chip auftreffen und die Weiterleitung der jeweils vom Chip aufgenommenen Fotoanregungen an das neuronale Netz mindestens so lange fortgesetzt wird, bis das neuronale Netz wenigstens ein für das Objekt spezifisches Signal abgibt, das als Folgeschritt eine Sortiervorrichtung in Gang setzt, wobei das durch das spezifische Signal gekennzeichnete Objekt aussortiert wird.

2. Verfahren nach Anspruch 1, dadurch gekennzeichnet, daß das Objektgemisch ein Abfallgemisch ist.

3. Verfahren nach einem der Ansprüche 1 oder 2, dadurch gekennzeichnet, daß das neuronale Netz zusätzlich mit Fuzzy-Regeln arbeitet.

4. Verfahren nach einem der Ansprüche 1 bis 3, dadurch gekennzeichnet, daß die vom Chip aufgenommene Fotoanregung vor Weiterleitung an das neuronale Netz spektral zerlegt wird, einem Kantenfilter und / oder einem Texturfilter zugeführt wird, wobei das erhaltene graue Licht bevorzugt zusätzlich und das spektral zerlegte Licht und / oder die durch das Kantenfilter erhaltene Objektkontur und / oder die durch das Texturfilter erhaltene Oberflächenstruktur an ein neuronales Netz weitergeleitet werden.

5. Verfahren nach einem der Ansprüche 1 bis 4, dadurch gekennzeichnet, daß die vom Objekt ankommenden Wellen spektral zerlegt werden und anschließend auf das mit Fotodioden ausgestattete Chip auftreffen.

6. Verfahren nach einem der Ansprüche 1 bis 5, dadurch gekennzeichnet, daß mit sichtbarem Licht gearbeitet wird.

7. Verfahren nach einem der Ansprüche 1 bis 6, dadurch gekennzeichnet, daß die Erkennung von Objekten aus Objektgemischen nach Vereinzelung der Objekte erfolgt.

8. Vorrichtung zum Erkennen von Objekten zur Durchführung des Verfahrens nach Anspruch 1, die eine Strahlenquelle für elektromagnetische Wellen aus dem UV- bis IR-Bereich und eine elektronische Signalverarbeitungsanlage enthält, wenigstens ein mit Fotodioden ausgestattetes Chip zur Aufnahme von elektromagnetischen Wellen aufweist, die von einem bestrahlten Objekt ankommen, sowie Mittel zur Änderung bestimmter einzelner oder mehrerer Objektmerkmale, wie räumliche Anordnung, Form und Konturen oder zur Entfernung von Teilen des Objekts, wobei nach solchen Änderungen die vom Objekt ankommenden Wellen auf das Chip auftreffen und die ein neuronales Netz aufweist, an das vom Chip aufgenommene Fotoanregung mindestens so lange weitergeleitet wird, bis das neuronale Netz wenigstens ein für das Objekt spezifisches Signal abgibt, so daß eine vorhandene Sortiervorrichtung in Gang gesetzt wird, die vom neuronalen Netz wenigstens ein Signal erhält zur Aussortierung eines Objekts.

## Claims

1. Process for the identification of objects by irradiating the objects with electromagnetic waves in the UV - to the IR-range, processing of the waves arriving from the object by an electronic signal processing unit and release of signals from the electronic signal processing unit, whereby the waves arriving from the object hit at least one chip equipped with photo diodes, which transmits the photo excitation received to a neuronal grid, whereby after respective modifications of certain individual or several object characteristics, like arrangement in space, form and contour or change of characteristics by removing parts of the object, the respective waves arriving from this object hit the chip and whereby the transmission of the respective photo excitations received by the chip to the neuronal grid is continued for such a period of time until the neuronal grid submits at least one signal specific for the object, which as a subsequent step puts in operation a sorting device, by which the object identified through the specific signal is sorted out.

2. Process according to claim 1, characterized in that the mixture of objects is a mixture of waste materials.

3. Process according to claim 1 or 2, characterized in that the neuronal grid in addition applies Fuzzy rules.

4. Process according to claims 1 to 3, characterized in that the photo excitation received by the chip is spectrally analysed, supplied to an edge filter and/or texture filter before transmission to the neuronal grid, whereby preferable additionally gray light obtained and the light spectrally analysed and /or the object contour obtained by the edge filter and/or the surface structure obtained by the texture filter are transmitted to a neuronal grid.

5. Process according to claims 1 to 4, characterized in that the waves arriving from the object are spectrally analysed and subsequently hit a chip equipped with photo diodes.

6. Process according to claims 1 to 5, characterized in that visible light is used.

7. Process according to claims 1 to 6, characterized in that the identification of objects of the object mixture takes place after separation of the objects from each other.

8. Device for the identification of objects according to the process disclosed in claim 1, which comprises a radiation source für elektromagnetic waves of the UV- to IR-range and a signal processing unit, at least one chip equipped with photo diodes for the reception of elektromagnetic waves, which arrive from an irradiated object, as well as means for the modification of certain individual or of several object characteristics, like arrangement in space, form and contours or by removing parts of the object, whereby after such changes the waves arriving from the object hit the chip and which comprises a neuronal grid, to which photo excitation received by the chip is transmitted for such a period of time until the neuronal grid submits at least one signal, specific for the object, whereby a sorting device available, is put in operation, which receives at least one signal from the neuronal grid followed by sorting out an object.

## Revendications

1. Procédé pour l'identification des objects par irradiation des objects avec des ondes électromagnétiques des rayons ultraviolet à infrarouge, transformation des ondes, arrivants de l'object par une installation électronique pour la transformation des signaux et émission des signaux de l'installation électronique pour transformation des signaux, à l'occasion de quoi les ondes arrivants de l'object rencontrent au moins un chip équipé avec des photodiodes, quel transmis la photoexcitation á un réseau neuronal, á l'occasion de quoi les photoexitations respectives de cet object recontrent le chip après des respectives modifications définies des individuelles ou plusieurs caractéristiques du object, comme la position spatialle, forme et contour ou des modifications par élimination des parts du object, et à l'occasion de quoi la transmission des photoexitations recu du chip au réseau neuronal est continuée ainsi longue jusque le réseau neuronal délivre au moins un signal spécifique, quel pour conséquence, met en mouvement un classeur, á l'occasion de quoi l'object charactérisé par le signal spécifique est éliminé.

2. Procédé selon la revendication 1, caractérisé en ce que le mélange des objets est un mélange des déchets.

3. Procédé selon les revendications 1 ou 2, caractérisé en ce que le réseau neuronal fait usage des règles Fuzzi.

4. Procédé selon les revendications 1 á 3, caractérisé en ce que la photoexcitation recu par le chip est analysée spectralmement, transmise á un filtre debout et / ou á un filtre texture avant la transmission au réseau neuronal, á l'occasion de quoi la lumière grise obtenue préférable supplémentaire et la lumière analysée spectralement et / ou la contour du object obtenue par le filtre debout et / ou la structure de la surface obtenue par le filtre texture sont transmises à un réseau neuronal.

5. Procédé selon les revendications 1 à 4, caractérisé en ce que les ondes arrivant du object sont analysés spectralement et recontrent ensuite le chip équipé avec des photodiodes.

6. Procédé selon les revendications 1 à 5, caractérisé en ce que de la lumière visible est appliquée.

7. Procédé selon les revendications 1 á 6, caractérisé en ce que l'identification des objects des mélanges des objects a lieu après le démariage des objects.

8. Appareil pour l'identifications des objects selon le procédé de la revendication 1, quel contient une source de rayonnement des rayons ultraviolet á infrarouge et une installation électronique pour la transformation des signaux, au moins un chip équipé avec des photodiodes pour la réception des ondes électromagnétiques, quelles arrivent d'un object exposé aux rayons ainsi que moyens pour la modification des individuelles ou plusieurs caratéristiques des objects comme la position spatialle, forme et contour ou des modifications par élimination des parts de l'object, à l'occasion de quoi après telles modifications les ondes arrivant du object, recontrent le chip et quel contient un réseau neuronal à lequel la photoexcitation recu par le chip est transmise au moins ainsi longue jusque le réseau neuronal délivre au moins un signal spécifique pour l'object en sorte que un classeur présent est mis en mouvement, quel obtient au moins un signal du réseau neuronal pour l'élimination du object.
